# EUROPÄISCHE PATENTSCHRIFT

(11) **EP 0 484 631 B1**
(45) Veröffentlichungstag und Bekanntmachung des Hinweises auf die Patenterteilung: **10.11.1993**
(21) Anmeldenummer: 91110743.1
(22) Anmeldetag: 28.06.1991
(51) Int. Cl.: H04N 5/92

(54) **Videorecorder mit einer Entzerrerschaltung**
Videorecorder with equalizing circuit
Enregistreur vidéo avec circuit égalisateur

(30) Priorität: 07.11.1990 DE 4035309
(43) Veröffentlichungstag der Anmeldung: 13.05.1992
(73) Patentinhaber: Nokia (Deutschland) GmbH, 75175 Pforzheim (DE)
(72) Erfinder: Reime, Gerd, W-7542 Schönberg 4 (DE)

(56) Entgegenhaltungen:
- DE-A- 3 809 394
- DE-C- 3 516 913
- US-A- 4 152 733
- FUNKSCHAU Bd. 60, Nr. 26, August 1988, MüNCHEN, DE Seiten 60 - 63; GERD REIME: 'Bildverbesserung im Detail'
- PATENT ABSTRACTS OF JAPAN vol. 10, no. 65 (E-388)(2122) 14. März 1986 & JP-A-60 216 681 (Sony) 30. Oktober 1985

## Beschreibung

Die Erfindung betrifft einen Videorecorder mit einer Entzerrerschaltung nach dem Oberbegriff des Anspruches 1 oder 6.

Aus der deutschen Patentschrift 3809394 ist eine im Signalweg für die Verarbeitung der frequenzmodulierten Leuchtdichtesignale eines Videorecorders angeordnete Entzerrerschaltung bekannt, die ein auf dem Hubbereich des unmittelbar die Leuchtdichte wiedergebenden Anteils des frequenzmodulierten Leuchtdichtesignals abgestimmtes Bandfilter enthält. Das Bandfilter besteht aus einem im Signalweg angeordneten Filterschaltungsglied und einem diesem nachgeschalteten Koppelglied. Außerdem ist parallel zum Ausgang des Filterschaltungsgliedes ein Diodenschalter angeschlossen. Durchlaufen Schwingungsamplituden des frequenzmodulierten Leuchtdichtesignales am Ausgang des Filterschaltungsgliedes eine sogenannte Schaltspannung des Diodenschalters, die im Knickbereich der Kennlinie des Diodenschalters definiert ist, geht der Diodenschalter in diesem Knickbereich vom Sperrzustand in einen Durchlaßzustand über und bildet mit dem Filterschaltungsglied und dem Durchlaßwiderstand des Diodenschalters ein Laufzeitglied mit einer amplitudenabhängigen Verzögerung der Laufzeit der frequenzmodulierten Leuchtdichtesignale. In diesem Schaltungszustand der Entzerrerschaltung wird die Laufzeit der frequenzmodulierten Leuchtdichtesignale abhängig von der Höhe der Amplitude dieser Schwingungen im Sinne einer Laufzeitkorrektur verzögert. Diese Laufzeitverzögerung kompensiert Frequenz- und Phasengangfehler insbesondere im tieferfrequenten, zunächst dem Hubbereich der Trägerschwingungen liegenden Bereich des unteren Seitenbandes der Trägerfrequenzen des frequenzmodulierten Leuchtdichtesignales, so daß die amplitudenmodulierten Leuchtdichtesignale am Ausgang des Frequenzdemodulators einen linearen Frequenzgang bis zu sehr hohen Videofrequenzen (über 3 MHz hinaus) aufweisen und damit eine hohe Bildauflösung bei der Bildwiedergabe vom Videoband ohne zusätzliches Rauschen erreicht wird.

Andererseits kommt bei kleinen Schwingungsamplituden der übertragenen frequenzmodulierten Leuchtdichtesignale, die die Schwellwertspannung des Diodenschalters nicht überschreiten und so den Diodenschalter im gesperrten Zustand halten, so daß sich die Entzerrerschaltung im Zustand des Bandfilterbetriebes befindet, die im wesentlichen die Grund- bzw. Trägerschwingungen des frequenzmodulierten Leuchtdichtesignales anstoßende Resonanzwirkung des Bandfilters zum Tragen. Dadurch werden die tiefen Schwingungen des unteren Seitenbandes der frequenzmodulierten Leuchtdichtesignale unterdrückt, denen die Trägerschwingungen der frequenzmodulierten Leuchtdichtesignale überlagert sind und die bei genügender Amplitude im Bereich ihres Schwingungsbauches die Trägerschwingungen der frequenzmodulierten Leuchtdichtesignale aus dem Schaltbereich des Frequenzdemodulators tragen können. Außerdem wird dadurch die Amplitude der Trägerschwingungen selbst vergrößert und Rauschsignale im Frequenzbereich oberhalb der Trägerschwingungen verringert.

Mit diesen Maßnahmen wird einerseits auf dem Bildschirm ein schärferes Videobild wiedergegeben. Andererseits werden bei der Bildwiedergabe das störende Kantenrauschen insbesondere an senkrechten Leuchtdichtekanten sowie störende Reflexionen und mit "Flitzer" bezeichnete Ausreißer weitgehend beseitigt.

Es hat sich jedoch bei der Anwendung dieser Maßnahmen gezeigt, daß die Güte der Aufzeichnung von Videoinformationen auf das Videoband einer Videokassette und die Qualität der Videobänder derart breit gestreut ist, daß es nicht möglich ist, eine Bemessung der bekannten Entzerrerschaltung zu finden, die den weiten Bereich des Qualitätsunterschiedes der wiederzugebenden Videokassetten in befriedigendem Umfang erfassen kann.

Der Erfindung liegt hiervor ausgehend die Aufgabe zugrunde, einen Videorecorder der eingangs angegebenen Art derart weiterzubilden, daß die Entzerrerschaltung in einem sehr weiten Bereich eines gestörten Schwingungsverhalten des frequenzmodulierten Leuchtdichtesignales einerseits die amplitudenabhängige Laufzeitkompensation und andererseits die Kompensation der gestörten Schwingungen möglichst so durchführt, daß eine Bildwiedergabe geringstmöglicher Störungen bei größtmöglicher Bildschärfe gewährleistet wird. Diese Aufgabe wird nach der Erfindung durch die im kennzeichnenden Teil des Anspruches 1 oder des Anspruches 6 angegebenen Maßnahmen gelöst.

Die Lösung dieser Aufgabe geht von der Erkenntnis aus, daß bei der Wiedergabe von Videobildern Wiedergabestörungen vorwiegend dann auftreten, wenn die Amplituden der langsamen Schwingungen des unteren Seitenbandes der frequenzmodulierten Leuchtdichtesignale in die Größenordnung der Amplituden der Trägerschwingungen der frequenzmodulierten Leuchtdichtesignale kommen. Eine wesentliche Verringerung dieser Wiedergabestörungen kann somit durch ein Verkleinern des Verhältnisses der Amplituden der tiefen Schwingungen des unteren Seitenbandes zu den Amplituden der Trägerschwingungen der frequenzmodulierten Leuchtdichtesignale dieses Seitenbandes erreicht werden. Durch diese Maßnahmen der Erfindung wird der Ausgangspegel einer der Entzerrerschaltung vorgeschalteten Übertragungsschaltung oder der Schaltpegel des Schwellwertschalters über die ermittelte mittlere Fehlrate und ein daraus gebildetes Stellsignal so eingestellt, daß die Entzerrerschaltung im wesentlichen noch als amplitudengesteuertes Laufzeitglied arbeitet und eine Bildwiedergabe mit bestmöglicher Bildschärfe und geringstmöglichen Bildstörungen durch Flitzer und Kantenrauschen erzeugt.

Sobald bei der Bildwiedergabe zusätzliche Störungen einer die durchschnittliche Fehlrate wesentlich übersteigenden Fehlrate auftreten, wird der Pegel des frequenzmodulierten Leuchtdichtesignals am Eingang der Entzerrerschaltung oder der Spannungsschwellwert am Schwellwertschalter so weit verändert, daß die Entzerrerschaltung von den so gestörten frequenzmodulierten Leuchtdichtesignalen vorwiegend in den Schaltungszustand einer Bandfilterschaltung übergeht und während dem Andauern der besonders hohen Störrate vorwiegend im Bandpaßzustand arbeitet und den gestörten Verlauf der Schwingungen des frequenzmodulierten Leuchtdichtesignales derart kompensiert, daß sie keine merkbaren Störungen mehr auf dem Bildschirm erzeugen.

Die Einstellung des Pegels der frequenzmodulierten Leuchtdichtesignale vor dem Eingang der Entzerrerschaltung wirkt ebenso wie die Einstellung des Schaltpegels des Schwellwertschalters der Entzerrerschaltung wie eine Verstellung in einen Bereich, in dem die Entzerrerschaltung stets auf die Wiedergabe von Videobildern optimaler Schärfe eingestellt ist. Dadurch wird die Bildwiedergabe durch einen erfindungsgemäßen Videorecorder optimal an die Aufzeichnungsgüte einer Videoaufzeichnung auf einem Videoband, an die Qualität des Bandmaterials und an die Wiedergabeeigenschaften des Videorecorders angepaßt. Es ist somit möglich, mit den Maßnahmen nach der Erfindung Videodarstellungen schlechter Aufzeichnungsqualität und schlechter Übertragungsqualität des verwendeten Wiedergabekanals mit hoher Qualitätsverbesserung gegenüber dem bisher bekannten Stand der Bildwiedergabe relativ ungestört und bestmöglich scharf auf einem Bildschirm wiederzugeben.

Die Unteransprüche kennzeichnen vorteilhafte Ausgestaltungen der Erfindung, die in der nachfolgenden Beschreibung näher erläutert werden. In den zugehörigen Zeichnungen zeigen
- Fig. 1:: ein Blockschaltbild einer erfindungsgemäßen Ausbildung des Signalweges für die von einem Aufzeichnungsträger abgetasteten frequenzmodulierten Leuchtdichtesignale in einem Videorecorder,
- Fig. 2:: Diagramme a), b), c) zur Erzeugung des von der Rate der Fehlschwingungen abhängigen Stellsignales zur Einstellung einer optimalen Güte der Bildwiedergabe,
- Fig. 3:: Diagramme des Frequenzganges der frequenzmodulierten Leuchtdichtesignale am Signaleingang der Entzerrerschaltung des in Figur 1 dargestellten Ausführungsbeispiels für eine Aufzeichnung und FM-Übertragung hoher, mittlerer und niedriger Qualtität,
- Fig. 4:: Diagramme (a) bis d3) des Schwingungszuges des frequenzmodulierten Leuchtdichtesignales am Signaleingang der Entzerrerschaltung (4a)), am Eingang des Schwellwertschalters (4b)), der Ausgangssignale des Fehlschwingungsdetektors (4c1, 4c2, 4c3) und der Rate der Fehlsignale (4d1, 4d2, 4d3) bei hoher, mittlerer und niedriger Übertragungsqualität,
- Fig. 5:: ein Blockschaltbild eines weiteren erfindungsgemäßen Ausbildungsbeispiels des Signalweges für die von einem Aufzeichnungsträger abgetasteten frequenzmodulierten Leuchtdichtesignale in einem Videorecorder,
- Fig. 6:: Diagramme a) bis c2) zur Wirkungsweise des in der Störerkennungsschaltung des in Figur 5 dargestellten Ausführungsbeispieles enthaltenen Fehlschwingungsdetektors bei einer örtlich besonders hohen Störrate.

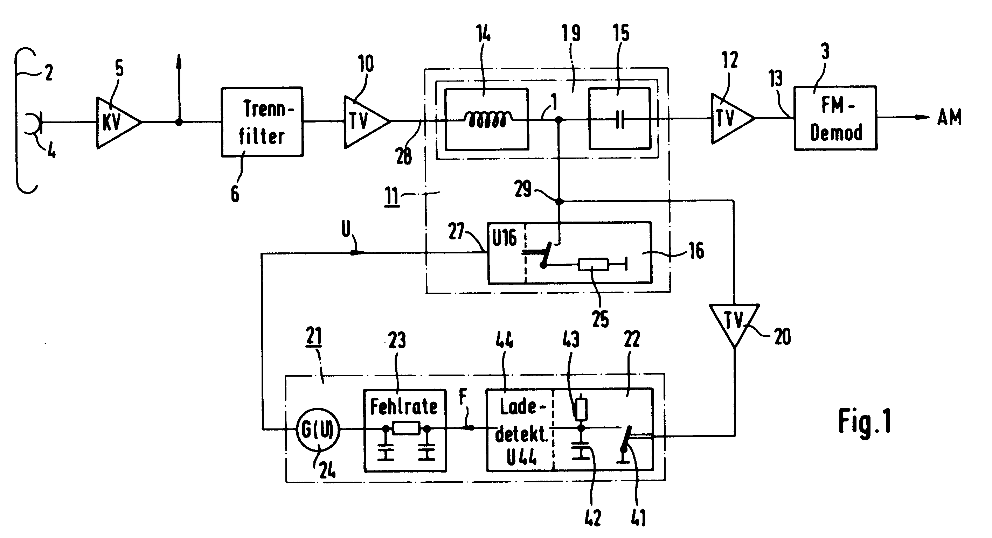

In Figur 1 ist ein Blockschaltbild eines Ausführungsbeispieles des in einem Videorecorder enthaltenen Signalweges 1 für die von einem Videoband 2 abgetasteten frequenzmodulierten Leuchtdichtesignale dargestellt. Dieses Ausführungsbeispiel erstreckt sich von dem in dem Videorecorder eingelegten Videoband 2 bis zu dem im Signalweg 1 für die Modulationswandlung von FM in AM der frequenzmodulierten Leuchtdichtesignale angeordneten Frequenzdemodulator 3. Die auf das Videoband 2 aufgezeichneten Videosignale werden von einem Videokopf 4 des Videorecorders abgetastet und über einen Kopfverstärker 5, eine Trennfilterschaltung 6, einen Trennverstärker 10, eine Entzerrerschaltung 11 und einen weiteren Trennverstärker 12 an den Signaleingang 13 des Frequenzdemodulators 3 gegeben. Die Trennfilterschaltung 6 trennt die frequenzmodulierten Leuchtdichtesignale von anderen vom Videoband 2 abgetasteten Videosignalen. Die Entzerrerschaltung 11 besteht in dem dargestellten Ausführungsbeispiel im wesentlichen aus einem induktiven Filterschaltungsglied 14, einem diesem nachgeschalteten kapazitiven Koppelglied 15 und einem zwischen dem Filterschaltungsglied 14 und dem Koppelglied 15 an den Signalweg 1 angeschlossenen Schwellwertschalter 16, dessen Schaltpegel U16 an einem Stelleingang 27 von einem Stellsignal einstellbar ist. Das Filterschaltungsglied 14 und das Koppelglied 15 der Entzerrerschaltung 11 ist jeweils so bemessen und ausgebildet, daß diese beiden Schaltungsglieder im gesperrten Zustand des Schwellwertschalters 16 ein Bandfilter 19 bilden, dessen Bandbreite den Hubbereich der Trägerschwingung des frequenzmodulierten Videosignales überträgt, der durch seine Frequenz unmittelbar die Leuchtdichte der übertragenen Bildzeile darstellt. Die Bemessung und Ausbildung des Filterschaltungsgliedes 14 ist andererseits so gewählt, daß das Filterschaltungsglied 14 im Durchlaßzustand des Schwellwertschalters 16 mit dessen Durchlaßwiderstand 25 ein Laufzeitglied 14/25 mit einer amplitudenabhängig gesteuerten Laufzeit bildet. Dieses Laufzeitglied kompensiert weitgehend die Phasenfehler, die das frequenzmodulierte Leuchtdichtesignal bei der Aufzeichnung auf das Videoband 2 und bei der Abtastung von diesem erlitten hat.

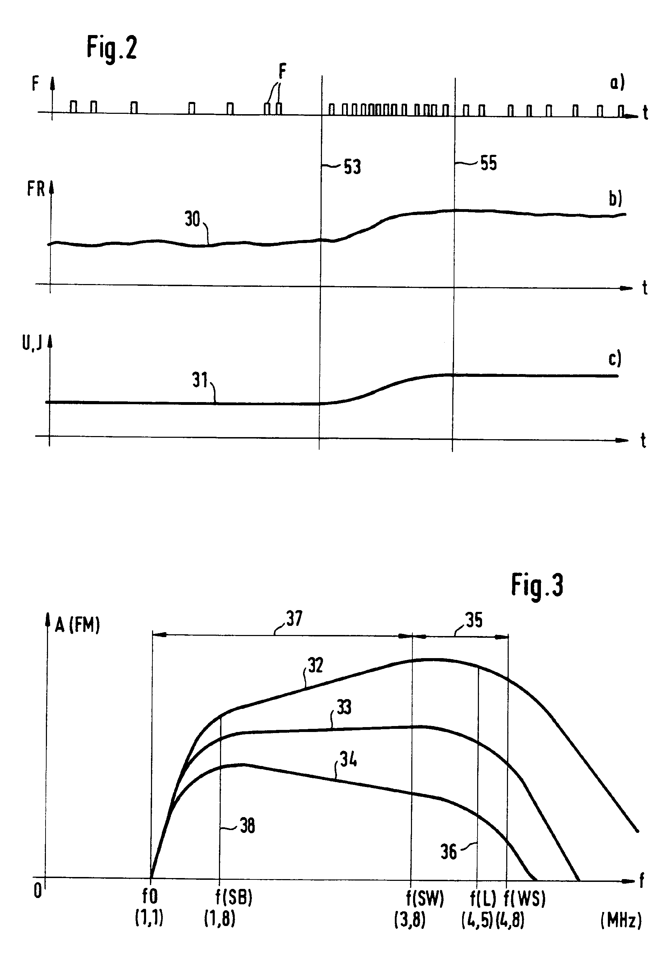

Über einen weiteren Trennverstärker 20 ist an den Signalweg 1 in der Entzerrerschaltung 11 eine Störerkennungsschaltung 21 angeschlossen, die im dargestellten Ausführungsbeispiel einen Fehlschwingungsdetektor 22, eine Fehlrateschaltung 23 und einen Stellsignalgenerator 24 enthält. Der Fehlschwingungsdetektor 22 erkennt fehlende oder einen bestimmten Erkennungspegel nicht überschreitende Einzelschwingungen der auf dem Signalweg 1 übertragenen frequenzmodulierten Leuchtdichtesignale und erzeugt bei dieser Detektion ein die Fehlstellen anzeigendes Fehlsignal F. Die Fehlrateschaltung 23 bildet aus der Rate dieser Fehlsignale F ein elektrisches Fehlratesignal 30 (Fig. 2a), aus dem der Stellsignalgenerator 24 ein der Größe des Fehlratesignals 30 entsprechendes Stellsignal 31 (Fig. 2b) für den Stelleingang 27 des Schwellwertschalters 16 erzeugt.

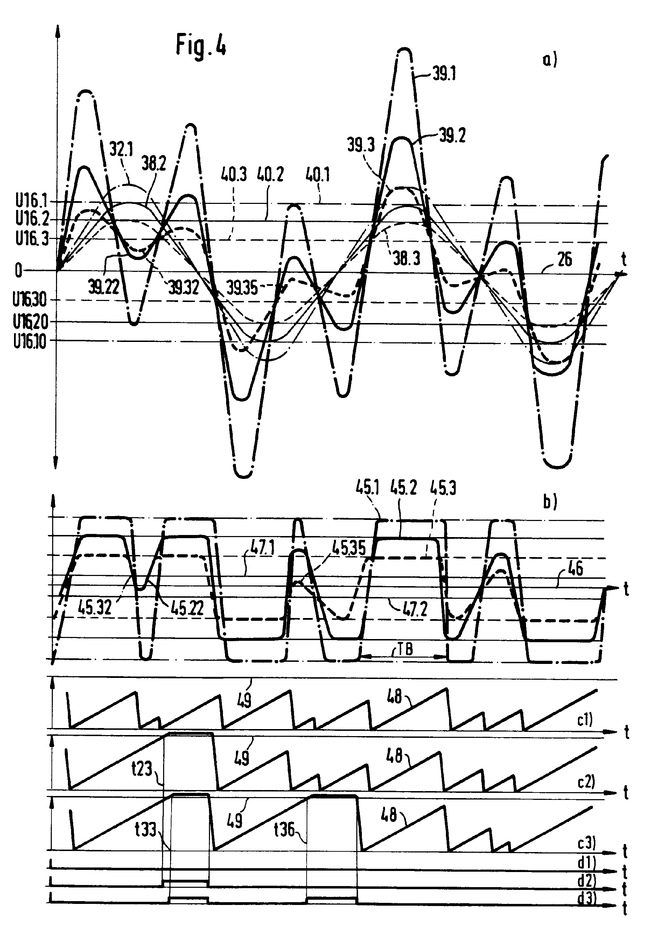

Mittels der Störerkennungsschaltung 21 und dem durch sie einstellbaren Wert des Schaltpegels U16 wird es möglich, die Entzerrerschaltung 11 an die unterschiedliche Aufzeichnungsqualität der Videobänder 2 und an die Übertragungsgüte der abgetasteten Aufzeichnung bis zum Signaleingang 28 der Entzerrerschaltung 11 im Signalweg 1 für die frequenzmodulierten Leuchtdichtesignale anzupassen. Im Diagramm der Figur 3 ist über der Frequenzachse f der Frequenzgang der Amplituden A(FM) der frequenzmodulierten Leuchtdichtesignale für eine Aufzeichnung hoher Güte (Kurve 32), eine Aufzeichnung normaler Güte (Kurve 33) und für eine Aufzeichnung geringer Güte (Kurve 34) am Signaleingang 28 der Entzerrerschaltung 11 dargestellt. In diesem Diagramm ist ein Hubbereich 35 für die Trägerschwingungen 36 des frequenzmodulierten Leuchtdichtesignales angegeben, deren Frequenz f(L) den Leuchtdichtewert der übertragenen Leuchtdichte kennzeichnet. An diesen Hubbereich schließt sich zu tieferen Frequenzen hin das untere Seitenband 37 an, dessen Schwingungen 38 für die Bildauflösung beziehungsweise die Schärfe des wiedergegebenen Videobildes verantwortlich sind. Im dargestellten Ausführungsbeispiel ist die Frequenz f(L) der schematisch dargestellten Trägerschwingung 2,5 mal so hoch wie die Frequenz f(SB) der durch die senkrechte Strecke 38 dargestellten Seitenbandschwingung, die der Trägerschwingung 36 überlagert ist. Diese Überlagerung führt dazu, daß der Schwingungszug der Trägerschwingungen mitunter aus dem Bereich der Nullinie der auf den Signalweg 1 übertragenen frequenzmodulierten Leuchtdichtesignale gelangt und dadurch Störungen bei der Demodulation im Frequenzdemodulator 3 verursacht, wie im Diagramm a) der Figur 4 schematisch dargestellt ist. In dieses Diagramm sind die Schwingungszüge 38.1, 38.2 und 38.3 der Seitenbandschwingung 38 für eine Aufzeichnung hoher Güte (38.1), einer Aufzeichnung normaler Güte (38.2) und einer Aufzeichnung niedriger Güte (38.3) schematisch dargestellt, denen die Trägerschwingungen 36 einer Aufzeichnung hoher Güte, einer Aufzeichnung einer normalen Güte und einer Aufzeichnung niedriger Güte überlagert sind, sodaß die im Diagramm a) dargestellten Schwingungszüge 39.1, 39.2 und 39.3 eines frequenzmodulierten Leuchtdichtesignales einer Aufzeichnung hoher Güte (39.1), normaler Güte (39.2) und niedriger Güte (39.3) entstehen. Aus dieser Darstellung ist ersichtlich, daß die Halbwelle 39.22 des Schwingungszuges 39.2 einer normalen Aufzeichnungsgüte und die Halbwellen 39.32 und 39.35 des Schwingungszuges 39.3 einer niedrigen Aufzeichnungsgüte die Nullinie 26 des frequenzmodulierten Leuchtdichtesignales nicht durchlaufen. Außerdem sind in das Diagramm a) der Figur 4 die Linien 40.1, 40.2 und 40.3 eingetragen, die den Schaltpegelwerten U16.1, U16.2 und U16.3 des Schwellwertschalters entsprechen, die vom Stellsignal 31 der Störerkennungsschaltung 21 am Stelleingang 27 des Schwellwertschalters 16 bei der Übertragung frequenzmodulierter Leuchtdichtesignale einer Aufzeichnung hoher Güte (Linie 40.1), normaler Güte (Linie 40.2) und niedriger Güte (Linie 40.3) eingestellt werden. Im Bereich um die Nullinie 26, der von den Linien 40.1 oder 40.2 oder 40.3 begrenzt wird, wirkt die Entzerrerschaltung 11 als Bandfilter für die Trägerschwingungen 36 der frequenzmodulierten Leuchtdichtesignale, außerhalb dieses Bereiches als amplitudengesteuertes Laufzeitglied, dessen Laufzeitverzögerung von dem diese Begrenzungslinien 40.1, 40.2 oder 40.3 überschreitenden Anteil der Amplitude bestimmt wird. Der Umschaltvorgang erfolgt im dargestellten Ausführungsbeispiel mit einem Schaltverlauf, der dem Schaltverlauf einer Schaltdiode im Kennlinienknick entspricht. Dadurch werden von der Umschaltung herrührende Demodulationsstörungen vermieden.

Im Diagramm b) der Figur 4 sind die Schwingungszüge 45.1, 45.2 und 45.3 dargestellt, die die Entzerrerschaltung unter dem Einfluß der eingestellten Schaltpegel U16.1, U16.2 und U16.3 aus den in Figur 4a dargestellten Schwingungszügen 39.1 bis 39.3 der frequenzmodulierten Leuchtdichtesignale auf dem Signalweg 1 am Signaleingang 29 des Schwellwertschalters 16 gebildet hat und die von der Störerkennungsschaltung 21 ausgewertet werden. Infolge der induktiven Zwischenspeicherung der elektrischen Energie des Anteils der Halbwellen, der während des Laufzeitschaltungszustandes der Entzerrerschaltung die Schaltpegel überschreitet, wird die Amplitude der nachfolgenden Halbwelle 39.22 im Bandfilterzustand der Entzerrerschaltung 11 erheblich vergrößert, so daß diese Halbwelle 45.22 des Schwingungszuges 45.2 auf dem Signalweg 1 am Signaleingang 29 des Schwellwertschalters 16 im dargestellten Ausführungsbeispiel die Nullinie 46 (Fig.4b) durchläuft, die gleichzeitig die Schaltpunktlinie 46 des Frequenzdemodulators 3 ist. Demzufolge werden sämtliche Halbwellen der im Diagramm a) der Figur 4 dargestellten Schwingungszüge 39.1 bis 39.3, denen die Schwingungszüge 45.1 bis 45.3 im Diagramm b) der Figur 4 entsprechen, vom Frequenzdemodulator 3 ausgewertet. Im Diagramm b) der Figur 4 sind beiderseits der Null- oder Schaltpunktlinie 46 je eine dicht daneben angeordnete Linie 47.1 und 47.2 eingezeichnet, die bei den auf den Signalweg 1 bezogenen Erkennungspegeln Ue1 und Ue2 des Fehlschwingungsdetektors 22 der Störerkennungsschaltung 21 bilden. Sobald eine Schwingung der im Diagramm b) der Figur 4 dargestellten Schwingungszüge 45.1 bis 45.3 von der Null- oder Schaltpunktlinie 46 her eine der Erkennungspegellinien 47.1 oder 47.2 überschreitet, entlädt im dargestellten Ausführungsbeispiel ein Entladeschalter 41 in Bruchteilen einer Halbschwingungslänge den Ladekondensator 42 eines Ladegliedes 43 des Fehlschwingungsdetektors 22, so daß sich der Ladekondensator 42 bis zum Erreichen einer Ladegrenze oder bis zur nächsten Entladung durch den Entladeschalter 41 aufladen kann. Die Ladeschaltung ist so bemessen, daß die Ladespannung U42 am Ladekondensator 42 innerhalb der größtmöglichen Schwingungsbreite TB einer Halbwelle der Trägerschwingungen innerhalb der Entzerrerschaltung 11 einen Ladeschwellenpegel U44 eines an den Ladekondensator 42 angeschlossenen Ladedetektors 44 nicht überschreitet. Der Ladeschwellenpegel U44 ist andererseits wieder so bemessen, daß die Ladespannung U42 des Ladekondensators 42 größer ist als der Ladeschwellenpegel U44, wenn der Ladekondensator 42 über die kleinste Schwingungszeit einer Trägerschwingung 36 geladen wird. Die Kurven der Ladespannungen U42 am Ladekondensator 42 sind in den Diagrammen c1) für eine Aufzeichnung hoher Aufzeichnungsgüte, c2) für eine Aufzeichnung normaler Aufzeichnungsgüte und c3) für eine Aufzeichnung niedriger Aufzeichnungsgüte in Figur 4 schematisch dargestellt. Diese Diagramme enthalten eine Linie 49 zur Darstellung des Ladeschwellenpegels U44. Im Diagramm 4b) durchläuft die Halbwelle 45.22 für eine normale Aufzeichnungsgüte zwar die Schaltpunktlinie 46, nicht jedoch die nachfolgende Erkennungspegellinie 47.2. Dadurch überschreitet im Diagramm 4c2) die Ladekurve 48 zum Zeitpunkt t23 die Linie 49 des Ladeschwellenpegels U44, so daß der Ladedetektor 44 zu diesem Zeitpunkt ein Fehlsignal F an die Fehlrateschaltung 23 erzeugt, wie im Diagramm d2) der Figur 4 für die Abtastung eines Videobandes mit normaler Aufzeichnungsgüte dargestellt ist. Bei der schematisch dargestellten Übertragung einer Aufzeichnung niedriger Aufzeichnungsgüte (Schwingungszug 45.3) erreicht die Halbwelle 45.32 nicht die zugehörige Erkennungspegellinie 47.2 und die Halbwelle 45.35 des gleichen Schwingungszuges 45.3 nach Durchlauf der Schaltpunktlinie 46 die Erkennungspegellinie 47.1 nicht, sodaß der Schwingungszug 48 im Diagramm 4c3) sowohl zum Zeitpunkt t33 als auch zum Zeitpunkt t36 die Linie 49 des Ladeschwellenpegels U44 überschreitet und der Ladedetektor 44 zu diesen Zeitpunkten ein Fehlsignal F erzeugt, wie im Diagramm d3) der Figur 4 für eine Bildwiedergabe geringer Aufzeichnungsgüte des Videobandes 2 dargestellt ist.

Wie in Figur 4 den Diagrammen d1), das kein Fehlsignal F enthält, bis d3) zu entnehmen ist, wächst mit abnehmender Aufzeichnungsgüte die Dichte oder Rate der Fehlsignale F, so daß das in der Fehlrateschaltung 23 aus den Fehlsignalen F gebildete und im Diagramm b) der Figur 2 dargestellte Fehlratesignal 30 ein Maß für die Aufzeichnungsgüte und Übertragungsqualität der frequenzmodulierten Leuchtsignale bis zum Signaleingang 28 der Entzerrerschaltung 11 darstellt. Der der Fehlrateschaltung 23 nachgeschaltete Stellsignalgenerator 24 bildet aus dem Fehlratesignal 30 ein Stellsignal 31 für die Einstellung des Schaltpegels U16 des Schwellwertschalters 16 in der Weise, daß möglichst alle Halbwellen des die Entzerrerschaltung 11 durchlaufenden Schwingungszuges der frequenzmodulierten Leuchtdichtesignale die Schaltpunktlinie 46 wenigstens gerade noch durchlaufen. Die Störerkennungsschaltung 21 stellt somit einen der durchschnittlichen Aufzeichnungsqualität der augenblicklich übertragenen Bildwiedergabe entsprechenden Schaltpegel U16 am Schwellwertschalter 16 ein, der bei eben noch störungsfreier Bildwiedergabe eine bestmögliche Bildschärfe liefert. Im dargestellten Ausführungsbeispiel sinkt mit abnehmender Aufzeichnungsqualität (Kurve 32 zu Kurve 34 im Diagramm der Figur 3) auch der Schaltpegel U16 des Schwellwertschalters 16 (von U16.1 auf U16.3).

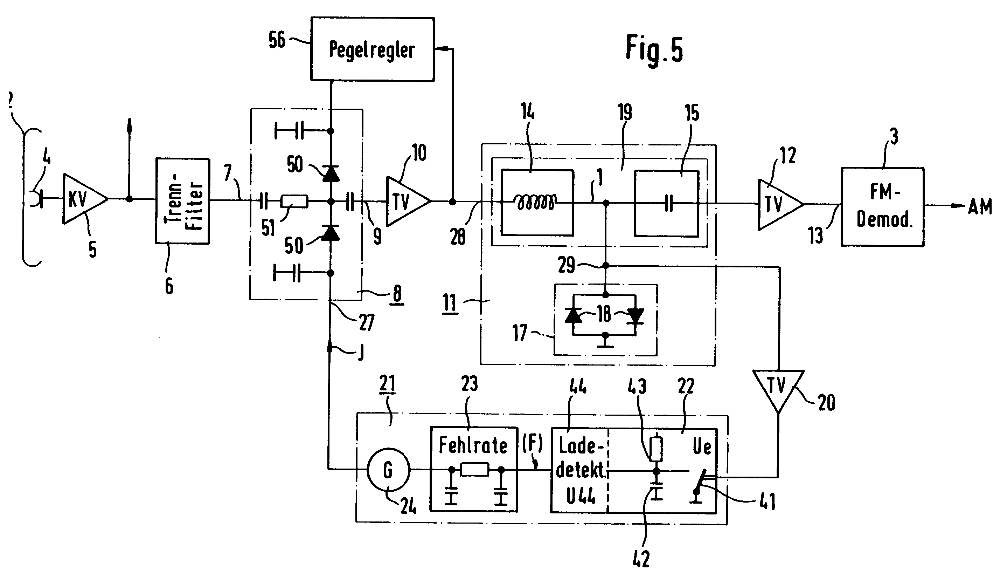

In Figur 5 ist ein weiteres Ausführungsbeispiel eines Signalweges für die von einem Aufzeichnungstrager 2 abgetasteten frequenzmodulierten Videosignale eines Videorecorders dargestellt. Mit dem in Figur 1 dargestellten Ausführungsbeispiel übereinstimmende Anordnungen und Signale sind mit den gleichen Bezugszeichen gekennzeichnet. Das in Figur 5 dargestellte Ausführungsbeispiel unterscheidet sich im wesentlichen von dem in Figur 1 dargestellten Ausführungsbeispiel eines derartigen Signalweges 1 dadurch, daß der Entzerrerschaltung eine einstellbare Übertragungsschaltung 8 in der Gestalt einer Dämpfungsschaltung 8 vorgeschaltet ist, daß ferner das von der Störerkennungsschaltung 21 erzeugte Stellsignal 31 dem Stelleingang 27 der Dämpfungsschaltung 8 zugeführt wird und daß außerdem der Schwellwertschalter 17 dieses Ausführungsbeispieles aus zwei antiparallelen Schaltdioden 18 gebildet ist, dessen Schaltpegel U17 vom Kennlinienknick der beiden antiparallel geschalteten Schaltdioden 18 bestimmt ist. Die Dämpfungsschaltung 8 besteht im dargestellten Ausführungsbeispiel im wesentlichen aus zwei an den Signalweg 1 angeschlossenen Ableitdioden 50 und einem den Ableitdioden vorgeschalteten, in der Signalleitung 1 angeordneten Längswiderstand 51. Der Längswiderstand 51 bildet mit den mittels eines Stellgleichstromes einstellbaren Durchgangswiderständen der Ableitdioden einen Spannungsteiler für die am Signaleingang 7 des Dämpfungsgliedes 8 ankommenden frequenzmodulierten Leuchtdichtesignale. Einer Bedämpfung der frequenzmodulierten Leuchtdichtesignale im Ausführungsbeispiel nach Figur 5 entspricht eine Anhebung des Schaltpegels U16 von zum Beispiel U16.3 auf U16.1 im Ausführungsbeispiel nach Figur 1.

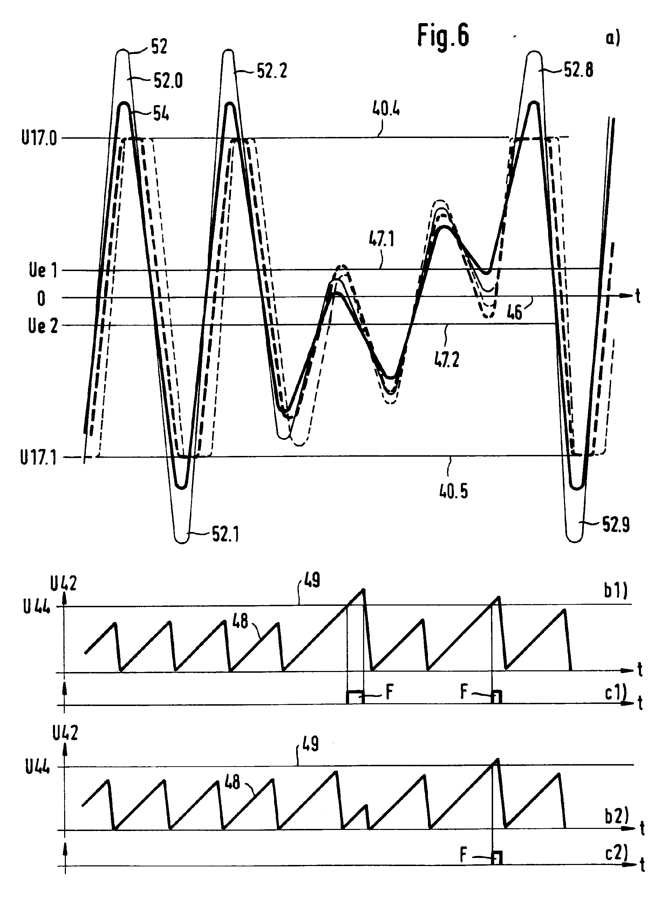

Im Diagramm a) der Figur 6 ist mit der dünn durchgezogenen Linie 52 ein Schwingungszug der frequenzmodulierten Leuchtdichtesignale am Signaleingang 28 der Entzerrerschaltung 11 für eine normale Aufzeichnungsgüte der Bildwiedergabe dargestellt. Dieser Aufzeichnungsgüte entspricht eine im Diagramm a) der Figur 2 bis zu einer Trennlinie 53 reichende Rate von Fehlsignalen F, die in der Fehlrateschaltung 23 ein Fehlratesignal 30 erzeugt. Dieses Fehlratesignal erzeugt wiederum im Stellsignalgenerator 24 der Störerkennungsschaltung 21 einen Stellstrom I, der den Dämpfungswert der Dämpfungsschaltung 8 so einstellt, daß der Mittelwert der Amplituden der normalen Halbschwingungen 52.0 bis 52.2 und 52.8 und 52.9 der frequenzmodulierten Leuchtdichtesignale am Signaleingang 28 der Entzerrerschaltung 11 einen bestimmten Verhältniswert zu dem auf diesen Signaleingang 28 projizierten Schaltpegel U17.0 einnimmt. Dieses Verhältnis ist mittels des Gleichstrom-Stellsignales so eingestellt, daß die Bildwiedergabe bei geringstmöglichen Bildstörungen eine bestmögliche Bildschärfe aufweist. Zwischen den Halbwellen 52.2 und 52.8 des Schwingungszuges 52 der frequenzmodulierten Leuchtdichtesignale ist eine Störung dieses Schwingungszuges angedeutet, die in der Störerkennungsschaltung 21 zusätzliche Fehlsignale F auslöst, wie in den Diagrammen b1) und c1) der Figur 6 angedeutet ist. Diese zusätzlichen Fehlsignale F erhöhen bei einem gehäuften Auftreten die Rate der Fehlsignale F erheblich, was im Diagramm a) der Figur 2 nach der Trennlinie 53 angedeutet ist, und führt zu einer wesentlichen Erhöhung des Fehlratesignales 30, wie das Diagramm b) der Figur 2 deutlich zeigt. Dieser zeitweise Anstieg des Fehlratesignales 30 ruft im Stellsignalgenerator 24 eine Änderung des Stellgleichstromes I hervor, so daß der Dämpfungswert der Dämpfungsschaltung 8 erhöht wird. Der Schwingungszug des durch die nach der Trennlinie 53 in den Diagrammen der Figur 2 dargestellten erhöhten Störrate zusätzlichen bedämpften Leuchtdichtesignales ist im Diagramm a) der Figur 6 durch die dick ausgezogene Linie 54 dargestellt. Durch die Bedämpfung des ursprünglichen Schwingungszuges 52 der frequenzmodulierten Leuchtdichtesignale gelangen im Verhältnis weitere Teile des Schwingungszuges der frequenzmodulierten Leuchtdichtesignale in den Bandfilterschaltungszustand der Entzerrerschaltung 11, nämlich die Teile des Schwingungszuges 54, die zwischen den Linien 40.4 und 40.5 des auf den Signaleingang 28 der Entzerrerschaltung 11 projizierten Schaltpegels U17 des Schwellwertschalters 17. Durch diese Maßnahme werden die Schwingungen des gestörten Teiles des Schwingungszuges 54 von der Entzerrerschaltung 11 mehr um die Nullinie 46 des Schwingungszuges 54 der frequenzmodulierten Leuchtdichtesignale zentriert. Diese Nullinie 46 ist gleichzeitig die Schaltpunktlinie des Frequenzdemodulators 3. Dadurch werden in der gestörten Zone Störsignale auf dem Bildschirm wesentlich verringert und gleichzeitig die Bildwiedergabe auf eine bestmögliche Schärfe eingestellt. Die von der Störerkennungsschaltung 21 nunmehr eingeregelte Störzone erzeugt eine ihr entsprechende erhöhte Rate von Fehlsignalen F, die sich zu der der Aufzeichnungsgüte entsprechenden Rate von Fehlsignalen addiert, wie im Diagramm a) der Fig. 2 nach der Trennlinie 55 angedeutet ist und die bis zum Ende ihres Bestehens einen erhöhten Wert des Fehlratesignales 30 erzeugt, wie in den Diagrammen b) und c) der Figur 2 schematisch dargestellt ist. Dieses im Diagramm c) der Figur 2 dargestellte, während der erhöhten Störrate bestehende Stellsignal stellt die Dämpfungsschaltung 8 so ein, daß am Signaleingang 28 der Entzerrerschaltung 11 der Schwingungszug 54 des frequenzmodulierten Leuchtdichtesignales anliegt. Diese Einstellung wird mittels der zusätzlichen Rate von Fehlsignalen F (Diagramm c2 der Figur 6), die im eingeregelten Zustand des Stellsignales 31 (Diagramm c der Figur 2) die Größe der Störung der Störstelle kennzeichnet und deren Erzeugung in den Diagrammen b) und c) der Figur 6 schematisch dargestellt ist, so lange gehalten, bis die örtliche Störstelle erhöhter Fehlrate wieder verschwunden ist.

In dem in Figur 5 dargestellten Ausführungsbeispiel ist außerdem vor dem Signaleingang 28 der Entzerrerschaltung 11 ein integrierender Pegelregler 56 an den Signalweg 1 angeschlossen. Dieser Pegelregler 56 mißt den durchschnittlichen Signalpegel auf dem Signalweg 1 vor dem Signaleingang 28 der Entzerrerschaltung 11 und regelt im dargestellten Ausführungsbeispiel den Stellstrom durch die Ableitdioden 50 der Dämpfungsschaltung 8 notfalls so ein, daß der durchschnittliche Signalpegel vor dem Signaleingang 28 der Entzerrerschaltung 11 einen Wert nicht unterschreitet, unterhalb dem die Wiedergabegüte der Bildwiedergabe wegen eines zu geringen Signalpegels wesentlich gemindert wird.

In einem weiteren, nicht näher dargestellten Ausführungsbeispiel ist die einstellbare Übertragungsschaltung 8 vor dem Signaleingang 28 der Entzerrerschaltung 11 ein symetrischer Verstärker, dessen Verstärkungsfaktor an einem Stelleingang durch ein Stellsignal auf einen jeweils erforderlichen Wert eingestellt wird.

## Patentansprüche

1. Videorecorder
- mit einer im Signalweg (1) für die Verarbeitung der frequenzmodulierten Leuchtdichtesignale angeordneten Entzerrerschaltung (11),
- die in einem ersten Schaltungszustand ein auf den Hubbereich der Trägerschwingungen des unmittelbar die Leuchtdichte wiedergebenden Anteils des frequenzmodulierten Leuchtdichtesignals abgestimmtes Bandfilter (19)
- und in einem zweiten Schaltungszustand ein amplitudengesteuertes Laufzeitglied (14/18) bildet, das die Phase des frequenzmodulierten Leuchtdichtesignals mit zunehmender Signalamplitude zunehmend verzögert,
- und mit einem an den Signalweg angeschlossenen Schwellwertschalter (17), der die Entzerrerschaltung vom ersten in den zweiten Schaltungszustand schaltet, wenn der Schwingungszug (52) des frequenzmodulierten Leuchtdichtesignales in der Entzerrerschaltung einen vorgegebenen Schaltpegel (U17) durchläuft,
**dadurch gekennzeichnet**,
- daß der Entzerrerschaltung (11) eine an einem Stelleingang (27) auf einen bestimmten Ausgangspegel einstellbare Übertragungsschaltung (8) vorgeschaltet ist
- und daß an den Signalweg (1) eine Störerkennungsschaltung (21) angeschlossen ist, die fehlende oder einen bestimmten Erkennungspegel (Ue) der Störerkennungsschaltung nicht durchlaufende Einzelschwingungen der in der Entzerrerschaltung übertragenen frequenzmodulierten Leuchtdichtesignale detektiert und ein von der Rate (Fehlratesignal 30) dieser Einzelschwingungen abhängiges Stellsignal (31) für den Stelleingang (27) der Übertragungsschaltung eines derartigen Verlaufes erzeugt, daß mit zunehmender Fehlrate eines Schwingungsverlaufes des frequenzmodulierten Leuchtdichtesignales die Entzerrerschaltung für einen zunehmenden Anteil dieses Schwingungsverlaufes in den Bandfilter-Schaltungszustand geschaltet ist.

2. Videorecorder nach Anspruch 1,
**dadurch gekennzeichnet**,
daß die Übertragungsschaltung (8) eine Dämpfungsschaltung ist, deren Dämpfungswerte an einem Stelleingang (27) einstellbar sind.

3. Videorecorder nach Anspruch 1,
**dadurch gekennzeichnet**,
daß die Übertragungsschaltung (8) ein einstellbarer Verstärker mit einem Stelleingang ist, dessen Verstärkungsfaktor an diesem Stelleingang einstellbar ist.

4. Videorecorder nach Anspruch 2,
**dadurch gekennzeichnet**,
daß die Dämpfungsschaltung (8) eine symmetrisch ausgebildete Spannungsteilerschaltung mit einem Längswiderstand (51) im Signalweg (1) der frequenzmodulierten Leuchtdichtesignale und zwei symmetrisch dazu angeordneten, gleichstromgesteuerten Diodenstrecken (50) ist.

5. Videorecorder nach einem der Ansprüche 1 bis 4,
**dadurch gekennzeichnet**,
daß zwischen den Signalweg (1) und die Übertragungsschaltung (8) ein integrierender Pegelregler (56) geschaltet ist, der zusätzlich den Ausgangspegel der Übertragungsschaltung so regelt, daß der durchschnittliche Signalpegel des frequenzmodulierten Leuchtdichtesignales (54) am Signaleingang (28) der Entzerrerschaltung (11) einen vorgegebenen Mindestpegel nicht unterschreitet.

6. Videorecorder
- mit einer im Signalweg (1) für die Verarbeitung der frequenzmodulierten Leuchtdichtesignale angeordneten Entzerrerschaltung (11),
- die in einem ersten Schaltungszustand ein auf den Hubbereich der Trägerschwingungen des unmittelbar die Leuchtdichte wiedergebenden Anteils des frequenzmodulierten Leuchtdichtesignals abgestimmtes Bandfilter (19)
- und in einem zweiten Schaltungszustand ein amplitudengesteuertes Laufzeitglied (14/25) bildet, das die Phase des frequenzmodulierten Leuchtdichtesignales mit zunehmender Signalamplitude zunehmend verzögert,
- und mit einem an den Signalweg angeschlossenen Schwellwertschalter (16), der die Entzerrerschaltung vom ersten in den zweiten Schaltungszustand schaltet, wenn der Schwingungszug (39) des frequenzmodulierten Leuchtdichtesignales in der Entzerrerschaltung einen vorgegebenen Schaltpegel (U16) durchläuft,
**dadurch gekennzeichnet**,
- daß der Schaltpegel (U16) des Schwellwertschalters (16) an einem Stelleingang (27) einstellbar ist
- und daß an den Signalweg (1) eine Störerkennungsschaltung (21) angeschlossen ist, die fehlende oder einen bestimmten Erkennungspegel (Ue) der Störerkennungsschaltung nicht durchlaufende Einzelschwingungen (45.22, 45.32, 45.35) der in der Entzerrerschaltung übertragenen frequenzmodulierten Leuchtdichtesignale (45) detektiert und ein von der Rate (Fehlratesignal 30) dieser Einzelschwingungen abhängiges Stellsignal (31) für den Stelleingang (27) des Schwellwertschalters (16) eines derartigen Verlaufes erzeugt, daß mit zunehmender Fehlrate eines Schwingungsverlaufes des frequenzmodulierten Leuchtdichtesignals die Entzerrerschaltung für einen zunehmenden Anteil dieses Schwingungsverlaufes in den Bandfilter-Schaltungszustand geschaltet ist.

7. Videorecorder nach einem der Ansprüche 1 bis 6,
**dadurch gekennzeichnet**,
daß die Störerkennungsschaltung (21) folgende Funktionsgruppen aufweist:
einen Fehlschwingungsdetektor (22), der im frequenzmodulierten Leuchtdichtesignal (39,54) fehlende oder einen bestimmten Erkennungspegel (Ue) der Störerkennungsschaltung nicht durchlaufende Einzelschwingungen erkennt und durch ein Fehlsignal (F) anzeigt, eine Fehlrateschaltung (23) zur Bildung eines Fehlratesignales (30) aus den Fehlsignalen (F) und einen nachgeschalteten Stromgenerator (24), der ein vom Verlauf des Fehlratesignals abhängiges Stellsignal (31) erzeugt.

8. Videorecorder nach einem der Ansprüche 1 bis 7,
**dadurch gekennzeichnet**,
daß der Schaltpegel des Schwellwertschalters (16,17) der Mittelwert eines in der Art eines vom Sperrbereich in den Durchlaßbereich übergehenden Diodenschalters gebildeter Schaltbereich ist.

## Claims

1. Video recorder
- having an equalizing circuit (11) arranged in the signal path (1) for processing the frequency-modulated luminance signals, which equalizing circuit
- in a first control state forms a band-pass filter (19) adapted to the deviation range of the carriers of the frequency-modulated luminance signal portion representative of the luminance and
- in a second control state forms an amplitude-controlled monostable element (14/18) which progressively delays the phase of the frequency-modulated luminance signal as the signal amplitude increases,
- and having a trigger (17) that switches over the equalizing circuit from a first to a second control state when the cycle (52) of the frequency-modulated luminance signal passes a predetermined operating level (U17) in the equalizing circuit,
**characterized in that**
- the equalizing circuit (11) is preceded by a transmission circuit (8) that can be adjusted to a given output level via a control input (27)
- and that an interference recognition circuit (21) is connected to the signal path (1) for detecting missing individual oscillations of the frequency-modulated luminance signals transmitted in the equalizing circuit, or any such oscillations that do not pass a given recognition level (Ue) of the interference recognition circuit, and for generating a control signal (31) representative of the rate (default rate signal (30) of such individual oscillations for the control input (27) of the transmission circuit of a shape such that as the default rate of an oscillation curve of the frequency-modulated luminance signal increases, the equalizing circuit is switched to the band-pass filter circuit state for an increasing portion of that oscillation curve.

2. Video recorder according to claim 1,
**characterized in that**
the transmission circuit (8) is an attenuator circuit whose attenuation factors can be adjusted via a control input (27).

3. Video recorder according to claim 1,
**characterized in that**
the transmission circuit (8) is an adjustable amplifier with a control input whose amplification factor can be adjusted via that control input.

4. Video recorder according to claim 2,
**characterized in that**
the attenuator circuit (8) is a symmetrical voltage divider circuit comprising a series resistance (51) in the signal path (1) of the frequency-modulated luminance signals and two d.c.-controlled diode paths (50) arranged symmetrically therewith.

5. Video recorder according to any of claims 1 to 4,
**characterized in that**
there is connected between the signal path (1) and the transmission circuit (8) an integrated gain control (56) which additionally controls the output level of the transmission circuit in such a way that the average signal level of the frequency-modulated luminance signal (54) at the signal input (28) of the equalizing circuit (11) does not drop below a predetermined minimum level.

6. Video recorder
- having an equalizing circuit (11) arranged in the signal path (1) for processing the frequency-modulated luminance signals, which equalizing circuit
- in a first control state forms a band-pass filter (19) adapted to the deviation range of the carriers of the frequency-modulated luminance signal portion representative of the luminance and
- in a second control state forms an amplitude-controlled monostable element (14/25) which progressively delays the phase of the frequency-modulated luminance signal as the signal amplitude increases,
- and having a trigger (16) that switches over the equalizing circuit from a first to a second control state when the oscillation cycle (39) of the frequency-modulated luminance signal passes a predetermined operating level (U16) in the equalizing circuit,
**characterized in that**
- the operating level (U16) of the trigger (16) can be adjusted via a control input (27)
- and that an interference recognition circuit (21) is connected to the signal path (1) for detecting missing individual oscillations (45.22, 45.32, 45.35) of the frequency-modulated luminance signals (45) transmitted in the equalizing circuit, or any such oscillations that to not pass a given recognition level (Ue) of the interference recognition circuit, and for generating a control signal (31) representative of the rate (default rate signal 30) of such individual oscillations for the control input (27) of the trigger (16) of a shape such that as the default rate of an oscillation curve of the frequency-modulated luminance signal increases, the equalizing circuit is switched to the band-pass filter circuit state for an increasing portion of that oscillation curve.

7. Video recorder according to any of claims 1 to 6,
**characterized in that**
the interference recognition circuit (21) comprises the following functional groups:
a missing-oscillation detector (22) for detecting in the frequency-modulated luminance signal (39, 54), and indicating via a default signal (F), any missing individual oscillations or oscillations that do not pass a given recognition level (Ue) of the interference recognition circuit, a default rate circuit (23) for generating a default rate signal (30) from the default signals (F), and a current generator (24) connected downstream for generating a control signal (31) in response to the shape of the default rate signal.

8. Video recorder according to any of claims 1 to 7,
**characterized in that**
the operating level of the trigger (16, 17) is the mean value of a switching range formed in the manner of a diode switch transitioning from the blocking range to the transmission range.

## Revendications

1. Enregistreur vidéo
- avec un circuit d'atténuation (11) disposé dans le trajet des signaux (1) pour le traitement des signaux de luminance à modulation de fréquence qui
- dans un premier état de commutation forme un passe-bande (19) syntonisé sur la gamme d'amplitude des ondes porteuses de la fraction du signal de luminance à modulation de fréquence reproduisant directement la luminance
- et, dans un deuxième état de commutation, une bascule de retard (14/18) à commande d'amplitude atténuant progressivement la phase du signal de luminance à modulation de fréquence avec une amplitude de signal croissante,
- et avec un commutateur de valeurs de seuil (17) commutant le circuit d'atténuation du premier sur le second état de commutation, si le train d'oscillation (52) du signal de luminance à modulation de fréquence traverse dans le circuit d'atténuation un niveau de commutation présélectionné (U17),
**caractérisé en ce que**
- un circuit de transmission (8), réglable à une entrée de réglage (27) sur un niveau de sortie déterminé, est monté en amont du circuit d'atténuation (11),
- et qu'un circuit d'identification de dérangements (21) détectant des signaux de luminance à modulation de fréquence transmis dans le circuit d'atténuation manquant ou un certain niveau de détection (Ue) d'oscillations individuelles ne traversant pas le circuit d'identification de dérangement est branché sur le trajet des signaux (1) et générant un signal de réglage (31) assujetti aux taux (signal du taux de manques 30) de ces oscillations individuelles pour l'entrée de réglage (27) du circuit de transmission d'un tel écoulement, et que, lors d'un taux de manques croissant d'un écoulement d'oscillation du signal de luminance à modulation de fréquence, le circuit d'atténuation pour une fraction croissante de cet écoulement d'oscillation est commuté dans l'état de commutation passe-bande.

2. Enregistreur vidéo selon la revendication 1,
**caractérisé en ce que**
le circuit de transmission (8) est un circuit d'amortissement, dont les valeurs d'amortissement sont réglables sur une sortie de réglage (27).

3. Enregistreur vidéo selon la revendication 1,
**caractérisé en ce que**
le circuit de transmission (8) est un amplificateur réglable avec une entrée de réglage dont le facteur d'amplification est réglable sur cette entrée de réglage.

4. Enregistreur vidéo selon la revendication 2,
**caractérisé en ce que**
le circuit d'amortissement (8) est un circuit diviseur de tension symétrique avec une résistance en série (51) dans le trajet des signaux (1) des signaux de luminance à modulation de fréquence et deux lignes diodes (50) à commande par courant continu disposé symétriquement au circuit.

5. Enregistreur vidéo selon l'une des revendications 1 à 4,
**caractérisé en ce que**
entre le trajet de signaux (1) et le circuit de transmission (8) est monté un régulateur de niveau (56) intégrateur réglant additionnellement le niveau de sortie du circuit de transmission de telle sorte que le niveau de signal moyen du signal de luminance à modulation de fréquence (54) sur l'entrée de signal (28) du circuit d'atténuation (11) ne passe pas en-dessous d'un niveau moyen présélectionné.

6. Enregistreur vidéo
- avec un circuit d'atténuation (11) disposé dans le trajet des signaux (1) pour le traitement des signaux de luminance à modulation de fréquence qui
- dans un premier état de commutation forme un passe-bande (19) syntonisé sur la gamme d'amplitude des ondes porteuses de la fraction du signal de luminance à modulation de fréquence reproduisant directement la luminance
- et, dans un deuxième état de commutation, une bascule de retard (14/25) à commande d'amplitude atténuant progressivement la phase du signal de luminance à modulation de fréquence avec une amplitude de signal croissante,
- et avec un commutateur de valeurs de seuil (16) commutant le circuit d'atténuation du premier sur le second état de commutation si le train d'oscillation (39) du signal de luminance à modulation de fréquence traverse dans le circuit d'atténuation un niveau de commutation présélectionné (U16),
**caractérisé en ce que**
- le niveau de commutation (U16) du commutateur de valeurs seuil (16) est réglable sur une entrée de réglage (27)
- et que un circuit d'identification de dérangement (21), détectant des signaux de luminance à modulation de fréquence (45) transmis dans le circuit d'atténuation manquant ou un certain niveau de détection (Ue) d'oscillations individuelles (45.22, 45.32, 45.35) ne traversant pas le circuit d'identification de dérangement, est branché sur le trajet des signaux (1) et générant un signal de réglage (31) assujetti aux taux (signal du taux de manques 30) de ces oscillations individuelles pour l'entrée de réglage (27) du commutateur de valeurs de seuil d'un tel écoulement, et que, lors d'un taux de manques croissant d'un écoulement d'oscillation du signal de luminance à modulation de fréquence, le circuit d'atténuation pour une fraction croissante de cet écoulement d'oscillations est commuté dans l'état de commutation passe-bande.

7. Enregistreur vidéo selon l'une des revendications 1 à 6,
**caractérisé en ce que**
le circuit de détection de dérangement (21) présente les groupes fonctionnels suivants :
un détecteur d'oscillations erronées (22) détectant des oscillations individuelles manquant dans le signal de luminance à modulation de fréquence (39,54) ou ne traversant pas un certain niveau de détection (Ue) du circuit d'identification de dérangement et les affichant par un signal de manques (F), un circuit de taux de manques (23) pour la formation d'un signal de taux de manques (30) à partir des signaux de manques (F) et un générateur de courant (24), monté en aval, générant un signal de réglage (31) assujetti à l'allure du signal du taux de manques.

8. Enregistreur vidéo selon l'une des revendications 1 à 7,
**caractérisé en ce que**
le niveau de commutation du commutateur de valeurs de seuil (16, 17) est la valeur moyenne d'une gamme de commutation du genre d'un commutateur à diodes, allant de la bande de blocage dans la bande de transmission.
